# EUROPEAN PATENT APPLICATION

(11) **EP 2 623 270 A2**
(43) Date of publication of application: **07.08.2013**
(21) Application number: 13152333.4
(22) Date of filing: 23.01.2013
(51) Int. Cl.: B25J 9/00, B25J 17/02, B25J 9/16

(54) **Parallel link robot system**

(30) Priority: 03.02.2012 JP 2012022026
(71) Applicant: Kabushiki Kaisha Yaskawa Denki, Kitakyushu-shi, Fukuoka 806-0004 (JP)
(72) Inventor: Fukudome, Kazuhiro, Kitakyushu-shi, Fukuoka 806-0004 (JP); Mihara, Nobuhiko, Kitakyushu-shi, Fukuoka 806-0004 (JP)
(74) Representative: Viering, Jentschura & Partner

(57) **Abstract**

A parallel link robot system includes a picking section from which a target object is picked, a placing section on which the target object picked from the picking section is placed, the placing section being arranged in a height position lower than the picking section, a parallel link robot including a plurality of parallel-connected link mechanism units and a holding unit attached to tip end portions of the link mechanism units, and a control unit for controlling an operation of the parallel link robot. The control unit is configured to execute a control for causing the parallel link robot to perform a picking operation by which the target object is held and picked from the picking section and a placing operation by which the target object picked by the picking operation is placed on the placing section.

## Description

### BACKGROUND OF THE INVENTION

### Field of the Invention

The present invention relates to a parallel link robot system and, more particularly, to a parallel link robot system provided with a parallel link robot including a plurality of parallel-connected link mechanism units.

### Description of the Related Art

Conventionally, there is known a parallel link robot system provided with a parallel link robot including a plurality of parallel-connected link mechanism units (see, e.g., Japanese Patent Application Publication No. 2011-88262).

JP2011-88262A discloses a parallel link robot provided with three parallel-connected link units (link mechanism units). In this parallel link robot, the three link units are connected to each other at the tip end portions thereof. An end effecter, e.g., a suction pad (a holding portion), for sucking and holding a workpiece (a target object) is attached to the tip end portions of the link units. The link units are arranged to obliquely extend upward and outward from the tip end portions.

In the parallel link robot disclosed in JP2011-88262A, the three link units (the link mechanism units) are arranged to obliquely extend upward and outward from the tip end portions. For that reason, it is structurally difficult for the parallel link robot to perform a work in a narrow region. This poses a problem in that, if a region (placing section) for placing a workpiece (a target object) held by the suction pad (the holding portion) is narrow (if a workpiece is to be placed into a small container such as a box or the like), it is difficult for the parallel link robot to perform a placing operation.

### SUMMARY OF THE INVENTION

In view of the problem noted above, it is an object of the present invention to provide a parallel link robot system capable of easily performing a placing operation even if a placing section is a narrow region.

In accordance with one aspect of the present invention, there is provided a parallel link robot system, including: a picking section from which a target object is picked; a placing section on which the target object picked from the picking section is placed, the placing section being arranged in a height position lower than the picking section; a parallel link robot including a plurality of parallel-connected link mechanism units respectively driven by a plurality of drive power sources and a holding unit attached to tip end portions of the link mechanism units; and a control unit for controlling an operation of the parallel link robot, wherein the control unit is configured to execute a control for causing the parallel link robot to perform a picking operation by which the target object is held and picked from the picking section and a placing operation by which the target object picked by the picking operation is placed on the placing section.

In the parallel link robot system in accordance with one aspect of the present invention, as stated above, the control unit is configured to execute the control for causing the parallel link robot to perform the picking operation by which the target object is held and picked from the picking section and the placing operation by which the target object picked by the picking operation is placed on the placing section arranged in the height position lower than the picking section. As a result, the placing operation is performed with respect to the placing section arranged in the height position lower than the picking section. Therefore, as compared with a case where the picking section and the placing section are arranged in the same height position, the positions of the tip end portions of the link mechanism units become low when the target object is placed on the placing section having a reduced height. In proportion thereto, it is possible to form the link mechanism units into a thinner shape. As a result, even if the placing section is a narrow region, the placing operation can be performed with ease.

With the present invention, as set forth above, it is possible to easily perform the placing operation even if the placing section is a narrow region.

### BRIEF DESCRIPTION OF THE DRAWINGS

Fig. 1 is a schematic view showing the overall configuration of a picking system employing a parallel link robot according to one embodiment of the present invention.
Fig. 2 is a schematic view for explaining the operation range of the parallel link robot according to one embodiment of the present invention.
Fig. 3 is a schematic top view of the parallel link robot shown in Fig. 2.
Fig. 4 is an enlarged view showing the vicinity of a first arm of the parallel link robot shown in Fig. 2.
Fig. 5 is a schematic view illustrating a state that the parallel link robot according to one embodiment of the present invention is performing a picking operation.
Fig. 6 is a schematic view illustrating a state that the parallel link robot according to one embodiment of the present invention is performing a placing operation.

### DESCRIPTION OF THE EMBODIMENTS

One embodiment of the present invention will now be described with reference to the accompanying drawings.

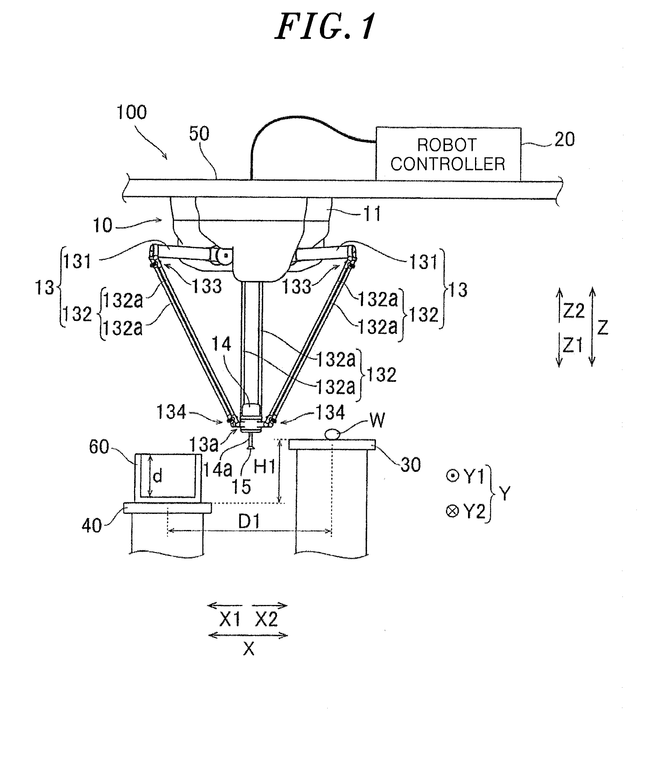

Referring first to Fig. 1, description will be made on the configuration of a picking system 100 employing a parallel link robot 10 in accordance with one embodiment of the present invention. The picking system 100 is one example of the "parallel link robot system" of the present invention.

As shown in Fig. 1, the picking system 100 includes a parallel link robot 10 fixedly installed on the lower surface (the surface facing in the direction of arrow Z1) of a ceiling portion 50, a robot controller 20 provided to control the operation of the parallel link robot 10, and two conveyors (a first conveyor 30 and a second conveyor 40) arranged below the parallel link robot 10. The robot controller 20 is one example of the "control unit" of the present invention. The first conveyor 30 and the second conveyor 40 are examples of the "picking section" and the "placing section" of the present invention.

The parallel link robot 10 is arranged in a position corresponding to the horizontal (X-direction) center portion of the first conveyor 30 and the second conveyor 40. The first conveyor 30 and the second conveyor 40 are arranged to extend parallel to each other (in the Y-direction) on the horizontal plane (the X-Y plane). The first conveyor 30 and the second conveyor 40 are arranged such that the horizontal center portions thereof are spaced apart from each other by a distance D1 in the horizontal direction. The first conveyor 30 is configured to convey a specified workpiece W (e.g., a foodstuff or the like) lying on the upper surface thereof (the surface facing in the direction of arrow Z2) in a specified direction (the direction of arrow Y1 or the direction of arrow Y2). The second conveyor 40 is configured to convey a box 60 lying on the upper surface thereof and having a specified depth d in a specified direction (the direction of arrow Y1 or the direction of arrow Y2). The workpiece W is one example of the "target object" of the present invention.

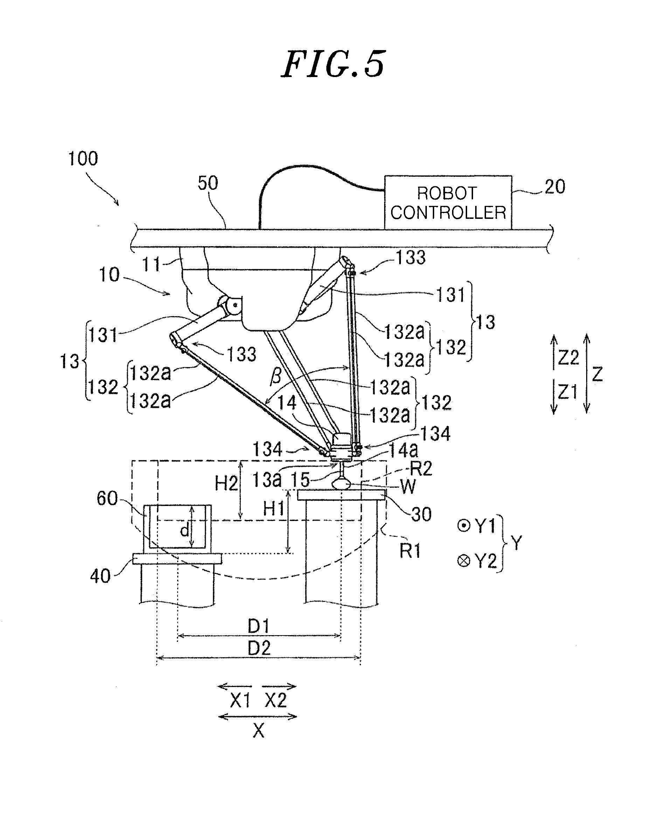

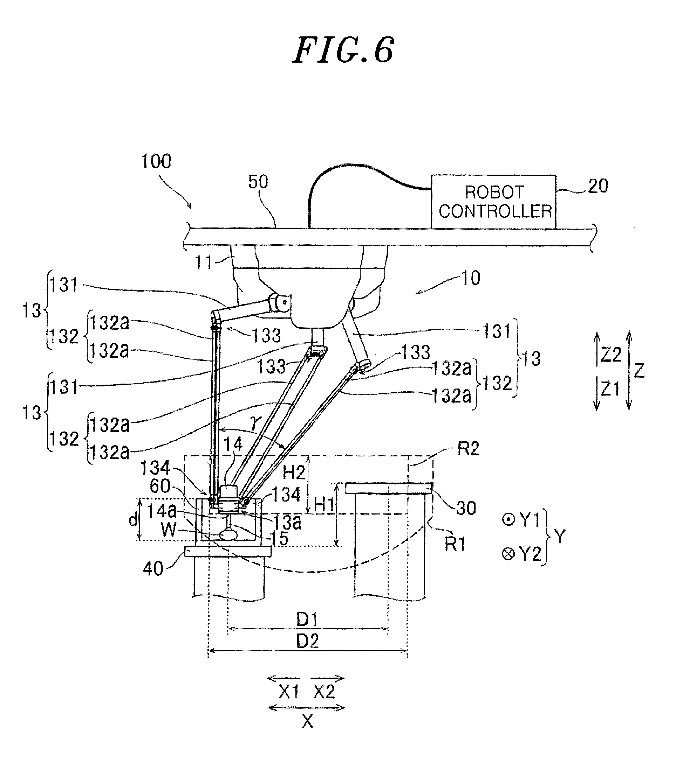

In the present embodiment, the height position (the Z-direction position) of the second conveyor 40 is set to become lower than the height position of the first conveyor 30 by a height H1. The robot controller 20 is configured to execute a control for causing the parallel link robot 10 to perform a picking operation (see Fig. 5) by which the workpiece W lying on the first conveyor 30 is held and picked and a placing operation (see Fig. 6) by which the workpiece W picked by the picking operation is transferred to the second conveyor 40 and is placed into the box 60 lying on the second conveyor 40.

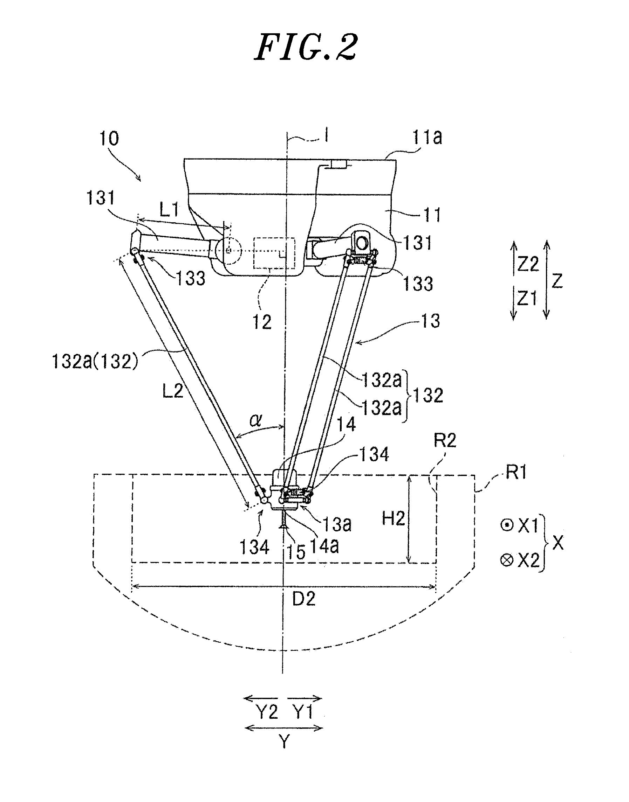

Next, the configuration of the parallel link robot 10 in accordance with the present embodiment will be described with reference to Figs. 2 through 6.

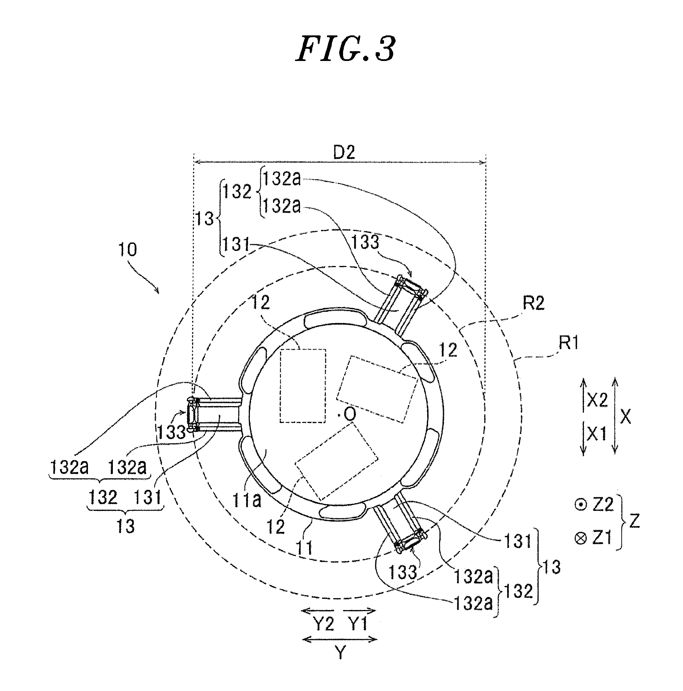

As shown in Figs. 2 and 3, the parallel link robot 10 includes a base unit 11, three servo motors 12 provided within the base unit 11, three parallel-connected link mechanism units 13 respectively driven by the three servo motors 12 and a head unit 14 attached to the tip end portions 13a of the three link mechanism units 13 and provided at its tip end portion 14a with a sucking portion 15 for sucking and holding the workpiece W (see Fig. 1). Each of the servo motors 12 is one example of the "drive power source" of the present invention. The sucking portion 15 is one example of the "holding unit" of the present invention.

The base unit 11 is configured to have a flat installation surface 11a installed on the lower surface (the surface facing in the direction of arrow Z1) of the ceiling portion 50. As shown in Fig. 3, the three servo motors 12 provided within the base unit 11 are arranged at an equal angular interval (at an interval of 120 degrees) around the center point 0 of the installation surface 11a when seen in a plan view (when seen in the direction of arrow Z1). Just like the three servo motors 12, the three link mechanism units 13 are arranged at an equal angular interval (at an interval of 120 degrees) around the center point 0 of the installation surface 11a when seen in a plan view.

As shown in Fig. 2, the three link mechanism units 13 are identical in configuration with one another. More specifically, each of the three link mechanism units 13 includes a first arm (upper arm) 131 connected to each of the servo motors 12 and a second arm (lower arm) 132 connected to the first arm 131. Since the three link mechanism units 13 are connected to one another in the tip end portions 13a thereof, the second arms 132 of the link mechanism units 13 cooperate to form a tapering shape.

One end portion of the first arm 131 is attached to the output shaft of each of the servo motors 12. The first arm 131 is rotated (swung) by each of the servo motors 12 in the up-down direction (Z-direction) on the vertical plane (the plane extending along the Z-direction). The second arm 132 mainly includes a pair of poles 132a extending parallel to each other. One end portion of the second arm 132 is connected to the other end portion of the first arm 131 (the opposite end portion of the first arm 131 from each of the servo motors 12) through a joint portion 133. The other end portion of the second arm 132 (the opposite end portion of the second arm 132 from the first arm 131) is connected to the head unit 14 through a joint portion 134 having the same configuration as the joint portion 133.

In the present embodiment, as shown in Fig. 2, the length L2 of the second arm 132 is set to become larger than the length L1 of the first arm 131. More specifically, the length L2 of the second arm 132 is set to become 2.5 times or more longer than the length L1 of the first arm 131. Fig. 2 shows a configuration in which the length L2 of the second arm 132 is set to become approximately three times longer than the length L1 of the first arm 131.

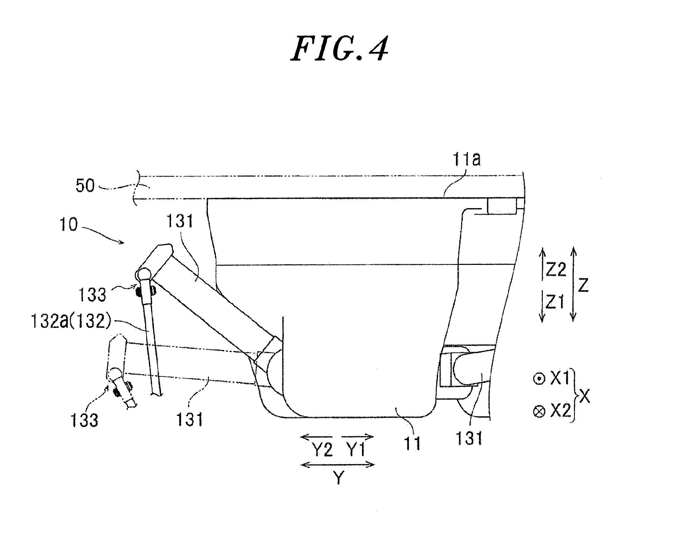

In the present embodiment, as shown in Fig. 4, the length L1 of the first arm 131 is set such that, when the first arm 131 is swung to the utmost limit toward the ceiling portion 50 on the vertical plane, the first arm 131 as a whole is positioned at the lower side of the installation surface 11a (the side facing in the direction of arrow Z1). Accordingly, even if the link mechanism units 13 are operated in whatever manner, the first arm 131 does not make contact with the lower surface of the ceiling portion 50 (the surface facing in the direction of arrow Z1).

The length L1 of the first arm 131 and the length L2 of the second arm 132 are set as mentioned above. In the present embodiment, when the sucking portion 15 is positioned on the center axis 1 extending in the vertical direction (Z-direction) of the parallel link robot 10, the inclination angle α of the second arm 132 with respect to the center axis 1 (see Fig. 2) is less than, e.g., 30 degrees. The inclination angle α becomes largest (about 29 degrees in Fig. 2) when, as shown in Fig. 2, the height position (Z-direction position) of the rotation center of the first arm 131 (the end portion of the first arm 131 near each of the servo motors 12) coincides with the height position of the portion (the joint portion 133) where the first arm 131 and the second arm 132 are connected to each other.

The length L1 of the first arm 131 and the length L2 of the second arm 132 are set as mentioned above. In the present embodiment, therefore, the following two regions are set as indicated by dot lines in Figs. 2, 3, 5 and 6. More specifically, there are set a movable region R1 of the tip end portion 14a of the head unit 14 attached to the tip end portions 13a of the link mechanism units 13 and a rigidity-maintaining operation region R2 defined inside the movable region R1 with a size smaller than the size of the movable region R1. The rigidity-maintaining operation region R2 is a region of the movable range R1, which indicates a region in which the rigidity of the link mechanism units 13 can be maintained within a specified range (namely, a region in which it is possible to inhibit the operation of the head unit 14 from becoming vibratory due to the reduction of the rigidity of the link mechanism units 13).

As shown in Figs. 2 and 3, the rigidity-maintaining operation region R2 is a cylindrical columnar region having a diameter D2, which is defined around the center axis 1 (see Fig. 2) extending along the vertical direction (Z-direction) through the center point O (see Fig. 3) of the installation surface 11a of the base unit 11 of the parallel link robot 10. In the present embodiment, as shown in Figs. 5 and 6, the robot controller 20 is configured to operate the parallel link robot 10 so that the tip end portion 14a of the head unit 14 can be positioned within the rigidity-maintaining operation region R2, i.e., the cylindrical columnar region. Consequently, the robot controller 20 causes the parallel link robot 10 to perform a picking operation (see Fig. 5) by which the workpiece W is picked from the first conveyor 30 and a placing operation (see Fig. 6) by which the workpiece W picked by the picking operation is placed into the box 60 lying on the second conveyor 40.

In the present embodiment, as shown in Figs. 5 and 6, the three link mechanism units 13 are configured such that the geometric shape formed by the second arms 132 during the placing operation (see Fig. 6) becomes sharper than the geometric shape formed by the second arms 132 during the picking operation (see Fig. 5) (namely, such that the angle between the second arms 132 during the placing operation becomes smaller than the angle between the second arms 132 during the picking operation). In other words, the sharpness of the geometric shape (the angle γ in Fig. 6) formed by the second arms 132 of the three link mechanism units 13 during the placing operation is smaller than the sharpness of the geometric shape (the angle β in Fig. 5) formed by the second arms 132 of the three link mechanism units 13 during the picking operation.

In the present embodiment, as shown in Figs. 5 and 6, it is preferred that the difference H1 between the height position (Z-direction position) of the first conveyor 30 and the height position of the second conveyor 40 is set to become equal to or smaller than the vertical (Z-direction) height H2 of the rigidity-maintaining operation region R2, i.e., the cylindrical columnar region. In Figs. 5 and 6, there is shown a state that the difference H1 between the height position of the first conveyor 30 and the height position of the second conveyor 40 is set substantially equal to the vertical height H2 of the rigidity-maintaining operation region R2, i.e., the cylindrical columnar region.

In the present embodiment, as shown in Figs. 5 and 6, it is preferred that the horizontal (X-direction) distance D1 between a picking region of the first conveyor 30 from which the workpiece W is picked and a placing region of the bottom surface of the box 60 disposed on the second conveyor 40 on which the workpiece W is placed (namely, the horizontal distance D1 between the horizontal centers of the first conveyor 30 and the second conveyor 40) is set to become equal to or smaller than the horizontal length D2 of the rigidity-maintaining operation region R2.

In the present embodiment, as described above, the robot controller 20 is configured to cause the parallel link robot 10 to perform the picking operation (see Fig. 5) by which the workpiece W is held and picked from the first conveyor 30 and the placing operation (see Fig. 6) by which the workpiece W picked by the picking operation is placed on the second conveyor 40 arranged in the height position (Z-direction position) lower than the first conveyor 30. As a consequence, the placing operation is performed with respect to the second conveyor 40 arranged in the height position lower than the first conveyor 30. Therefore, as compared with a case where the first conveyor 30 and the second conveyor 40 are arranged in the same height position, the positions of the tip end portions 13a of the three link mechanism units 13 become low when the workpiece W is placed on the second conveyor 40 having a reduced height. In proportion thereto, the angle between the second arms 132 of the three link mechanism units 13 can be made smaller. As a result, it is possible to easily perform the placing operation even if a placing region of the second conveyor 40 is narrow (even if the workpiece W is placed into the box 60 lying on the second conveyor 40 and having a specified depth d as in the present embodiment).

In the present embodiment, as described above, the robot controller 20 is configured to cause the parallel link robot 10 to perform the picking operation (see Fig. 5) and the placing operation (see Fig. 6) so that the tip end portion 14a of the head unit 14 can be positioned within the rigidity-maintaining operation region R2 in which the rigidity of the link mechanism units 13 can be maintained within a specified range. This makes it possible to maintain the rigidity of the link mechanism units 13 within the specified range during the picking operation and the placing operation. It is therefore possible to inhibit the operation of the head unit 14 from becoming vibratory due to the reduction of the rigidity of the link mechanism units 13. As a result, the picking operation and the placing operation can be performed in a stable manner.

In the present embodiment, as described above, the difference H1 between the height position (Z-direction position) of the first conveyor 30 and the height position of the second conveyor 40 is set equal to or smaller than the vertical (Z-direction) height H2 of the rigidity-maintaining operation region R2, i.e., the cylindrical columnar region. This enables the parallel link robot 10 to easily perform the picking operation (see Fig. 5) and the placing operation (see Fig. 6) within the rigidity-maintaining operation region R2. Accordingly, the rigidity of the link mechanism units 13 can be easily maintained within the specified range during the picking operation and the placing operation.

In the present embodiment, as described above, the horizontal (X-direction) distance D1 between the picking region of the first conveyor 30 from which the workpiece W is picked and the placing region of the second conveyor 40 on which the workpiece W is placed (namely, the horizontal distance D1 between the horizontal centers of the first conveyor 30 and the second conveyor 40) is set equal to or smaller than the horizontal length D2 of the rigidity-maintaining operation region R2 (namely, the diameter D2 of the rigidity-maintaining operation region R2, i.e., the cylindrical columnar region). Accordingly, even when the link mechanism units 13 are horizontally moved from the picking region toward the placing region, it is possible to easily maintain the rigidity of the link mechanism units 13 within a specified range.

In the present embodiment, as described above, the three link mechanism units 13 are configured such that the geometric shape formed by the second arms 132 during the placing operation becomes sharper than the geometric shape formed by the second arms 132 during the picking operation. Accordingly, it is possible to easily perform the placing operation even if a placing region of the second conveyor 40 has a narrow width (even if the workpiece W is placed into the box 60 lying on the second conveyor 40 and having a specified depth d as in the present embodiment).

In the present embodiment, as described above, the parallel link robot 10 is fixedly installed on the lower surface (the surface facing in the direction of arrow Z1) of the ceiling portion 50 and is configured such that, when the first arm 131 of each of the link mechanism units 13 of the parallel link robot 10 is swung to the utmost limit toward the ceiling portion 50 on the vertical plane (the plane extending in the Z-direction), the first arm 131 is positioned at the lower side of the installation surface 11a of the parallel link robot 10 attached to the ceiling portion 50. This makes it possible to operate the first arm 131 without bringing the first arm 131 into contact with the lower surface of the ceiling portion 50.

In the present embodiment, as described above, the length L2 (see Fig. 2) of the second arm 132 of each of the three link mechanism units 13 of the parallel link robot 10 is set to become 2.5 times or more as long as the length L1 (see Fig. 2) of the first arm 131. This makes it possible to further reduce the angle between the second arms 132 of the link mechanism units 13. It is therefore possible to easily inhibit the link mechanism units 13 from interfering with other equipment (e.g., the first conveyor 30 and the second conveyor 40) arranged near the parallel link robot 10. Since the weight of the first arm 131 becomes smaller just as much as the relative reduction of the length L1 of the first arm 131 connected to each of the servo motors 12, it is possible to reduce the load acting on each of the servo motors 12 when operating the first arm 131.

In the present embodiment, as described above, when the sucking portion 15 is positioned on the center axis 1 (see Fig. 2) extending in the vertical direction (Z-direction) of the parallel link robot 10, the inclination angle α (see Fig. 2) of the second arm 132 with respect to the center axis 1 is less than, e.g., 30 degrees. Accordingly, the sucking portion 15 attached to the tip end portions 13a of the three link mechanism units 13 can be moved in the vertical direction along the center axis 1 while keeping the angle between the second arms 132 of the three link mechanism units 13 relatively small.

It should be appreciated that the embodiment disclosed herein is illustrative and are not limitative in all respects. The scope of the present invention is defined by the claims and not by the foregoing description on the embodiment. All the modifications made within the meaning and scope equivalent to the claims are included in the scope of the present invention.

For example, while the parallel link robot provided with three link mechanism units is used in the foregoing embodiment, the present invention is not limited thereto. In the present invention, it may possible to employ a parallel link robot provided with two link mechanism units or four or more link mechanism units.

While the workpiece (target object) lying directly on the first conveyor (the picking section) is picked in the foregoing embodiment, the present invention is not limited thereto. In the present invention, a container such as a box or the like which contains a workpiece may be arranged on the first conveyor. The workpiece may be picked from the inside of the container lying on the first conveyor.

While the workpiece (target object) picked from the first conveyor (the picking section) is placed into the box lying on the second conveyor (the placing section) in the foregoing embodiment, the present invention is not limited thereto. In the present invention, the workpiece picked from the first conveyor may be directly placed on the second conveyor.

While the parallel link robot is arranged in a position corresponding to the horizontal center of the first conveyor (the picking section) and the second conveyor (the placing section) in the foregoing embodiment, the present invention is not limited thereto. In the present invention, the parallel link robot may be arranged near the first conveyor or may be arranged near the second conveyor.

While the head unit arranged in the tip end portions of the link mechanism units is operated within the rigidity-maintaining operation region belonging to the movable region in the foregoing embodiment, the present invention is not limited thereto. In the present invention, the link mechanism units may be operated inside the movable region and outside the rigidity-maintaining operation region.

While both the picking section and the placing section are formed of conveyors (the first conveyor and the second conveyor) in the foregoing embodiment, the present invention is not limited thereto. In the present invention, only one of the picking section and the placing section may be a conveyor. In the present invention, both the picking section and the placing section may not be conveyors but may be tables.

## Claims

1. A parallel link robot system, comprising:
a picking section from which a target object is picked;
a placing section on which the target object picked from the picking section is placed, the placing section being arranged in a height position lower than the picking section;
a parallel link robot including a plurality of parallel-connected link mechanism units respectively driven by a plurality of drive power sources and a holding unit attached to tip end portions of the link mechanism units; and
a control unit for controlling an operation of the parallel link robot,
wherein the control unit is configured to execute a control for causing the parallel link robot to perform a picking operation by which the target object is held and picked from the picking section and a placing operation by which the target object picked by the picking operation is placed on the placing section.

2. The system of claim 1, wherein the picking section and the placing section are arranged below the parallel link robot.

3. The system of claim 1 or 2, wherein the control unit is configured to cause the parallel link robot to perform the picking operation and the placing operation within a rigidity-maintaining operation region belonging to a movable region of the link mechanism units, in which the rigidity of the link mechanism units can be maintained within a specified range.

4. The system of claim 3, wherein the rigidity-maintaining operation region is a cylindrical columnar region defined around a center axis extending along a vertical direction of the parallel link robot, the difference between a height position of the picking section and a height position of the placing section being equal to or smaller than a vertical height of the rigidity-maintaining operation region.

5. The system of claim 3 or 4, wherein the horizontal distance between a picking region of the picking section from which the target object is picked and a placing region of the placing section on which the target object is placed is equal to or smaller than a horizontal length of the rigidity-maintaining operation region.

6. The system of any one of claims 1 to 5, wherein the link mechanism units are connected to one another in the tip end portions thereof.

7. The system of any one of claims 1 to 6, wherein the parallel link robot is fixedly installed on a lower surface of a ceiling portion, each of the link mechanism units of the parallel link robot including an arm configured to swing on a vertical plane, the arm being configured such that, when swung to the utmost limit toward the ceiling portion on the vertical plane, the arm is positioned below an installation surface of the parallel link robot attached to the ceiling portion.

8. The system of claim 7, wherein the arm is a first arm, and
each of the link mechanism units of the parallel link robot further includes a second arm connected to the first arm through a joint portion, the holding unit being attached to the opposite end portion of the second arm from the first arm, the length of the second arm being 2.5 times or more longer than the length of the first arm.

9. The system of claim 8, wherein the second arm is configured such that, when the holding unit is positioned on a center axis extending along a vertical direction of the parallel link robot, the inclination angle of the second arm with respect to the center axis becomes less than 30 degrees.

10. The system of any one of claims 2 to 9, wherein the control unit is configured to cause the parallel link robot to perform a placing operation by which the target object picked by the picking operation is placed into a box having a specified depth and lying on the placing section positioned in the height position lower than the picking section.

11. The system of any one of claims 1 to 10, wherein at least one of the picking section and the placing section includes a conveyor.

12. A parallel link robot system, comprising:
a picking section from which a target object is picked;
a placing section on which the target object picked from the picking section is placed, the placing section arranged in a height position lower than the picking section;
a parallel link robot including a plurality of parallel-connected link mechanism units respectively driven by a plurality of drive power sources and a holding unit attached to tip end portions of the link mechanism units; and
a control unit for controlling an operation of the parallel link robot,
wherein the control unit is configured to execute a control for causing the parallel link robot to perform a picking operation by which the target object is held and picked from the picking section, and
the control unit is configured to cause the parallel link robot to perform a placing operation by which the target object picked by the picking operation is placed into a box having a specified depth and lying on the placing section positioned in the height position lower than the picking section.

13. The system of claim 12, wherein at least one of the picking section and the placing section includes a conveyor.
